# EUROPEAN PATENT APPLICATION

(11) **EP 4 826 232 A1**
(43) Date of publication of application: **21.10.2026**
(21) Application number: 26172329.0
(22) Date of filing: 14.04.2026
(51) Int. Cl.: F02C 9/42, F02C 9/28

(54) **METHOD FOR ICR ENTRY**

(30) Priority: 16.04.2025 US 202519180848
(71) Applicant: Pratt & Whitney Canada Corp., Longueuil, Québec J4G 1A1 (CA)
(72) Inventor: DIZON, Ian, (01BE5) Longueuil, J4G 1A1 (CA); DARABI, Mostafa, (01BE5) Longueuil, J4G 1A1 (CA); TANG, Poi Loon, (01BE5) Longueuil, J4G 1A1 (CA); JARVO, James, (01BE5) Longueuil, J4G 1A1 (CA); THERIAULT, Sarah, (01BE5) Longueuil, J4G 1A1 (CA); DZAKOVIC, Dusan, (01BE5) Longueuil, J4G 1A1 (CA)
(74) Representative: Dehns

(57) **Abstract**

A system for controlling operation of engines (102, 104) of a multi engine aircraft between standby mode and active mode comprising an idle cruise regimen controller (304) configured to actuate entry of a selected engine (102, 104) into the standby mode of operation in response to receipt of an indication of the selected engine (102, 104) as a standby engine. The idle cruise regimen controller (304) is further configured to decrease a torque of the selected engine (102, 104) until the torque of the selected engine (102, 104) reaches a low setting, reduce a gas generator speed of the selected engine (102, 104) to a first target speed responsive to the torque of the selected engine (102, 104) reaching the low setting, maintain the gas generator speed of the selected engine (102, 104) at the first target speed for a predetermined cool down period and reduce the gas generator speed of the selected engine (102, 104) from the first target speed to a second target speed after expiration of the predetermined cool down period.

## Description

### TECHNICAL FIELD

This disclosure relates generally to a controlling entry of an engine into a standby mode of operation. More specifically, this disclosure relates to a system and method for controlling entry of an engine into a standby mode in an idle cruise regimen.

### BACKGROUND

Within multi-engine aircraft, during certain flight conditions, such as cruise conditions, one engine will be operated in a low-power mode while the other engine is operated in a normal or high power mode. Although cruise conditions are normally stable, it can be desirable to operate one engine in a high-power active mode and another engine in a low-power or no power standby mode. Operating the multi-engine system in this manner can provide fuel savings opportunities. Operating an engine in a low powered or standby mode is referred to as an idle cruise regimen (ICR). Although during cruise conditions, the aircraft may operate with only one of the two engines in an active mode of operation, the engine in standby mode must be able to quickly transition back into active mode should need arise. Additionally, the engine that is in the standby mode must be controlled in such a fashion to allow it to enter this standby mode and exit the standby mode over a number of operating conditions. Thus, there is a need for a control system that enables the quick and efficient transitions of an engine in between the standby mode and the active mode.

### SUMMARY

This invention relates to a system and method for controlling entry into a standby mode of operation in an idle cruise regimen.

In an aspect of the present invention, a system for controlling operation of engines of a multi engine aircraft between standby mode and active mode includes an idle cruise regimen controller configured to actuate entry of a selected engine into the standby mode of operation in response to receipt of an indication of the selected engine as a standby engine, where the idle cruise regimen controller is further configured to decrease a torque of the selected engine until the torque of the selected engine reaches a low setting, reduce a gas generator speed of the selected engine to a first target speed responsive to the torque of the selected engine reaching the low setting, maintain the gas generator speed of the selected engine at the first target speed for a predetermined cool down period, and reduce the gas generator speed of the selected engine from the first target speed to a second target speed after expiration of the predetermined cool down period.

Any single one or any combination of the following features may be used with the examples above. The system where the idle cruise regimen controller is further configured to turn off a heat bleed/generator for the selected engine. The idle cruise regimen controller is further configured to reduce a gas generator speed limit to a first level to reduce the gas generator speed to the first target speed. The idle cruise regimen controller is further configured to reduce the gas generator speed limit to a second level to reduce the gas generator speed to the second target speed. The idle cruise regimen controller is further configured to decrease the torque of the selected engine with reverse engine matching until the torque of the selected engine reaches 0%. The reverse engine matching minimizes NR droop during entry to the standby mode. The idle cruise regimen controller is further configured to maintain a maximum gas generated speed limit at a level while decreasing a torque of the selected engine.

In another aspect of the present invention, a method for controlling operation of engines of a multi engine aircraft between standby mode and active mode includes receiving an indication of a selected engine as a standby engine at an idle cruise regimen controller, actuating entry of a selected engine into the standby mode of operation in response to receipt of the indication of the selected engine as the standby engine at the idle cruise regimen controller, where the step of actuating entry further may include decreasing a torque of the selected engine until the torque of the selected engine reaches a low setting, reducing a gas generator speed of the selected engine to a first target speed responsive to the torque of the selected engine reaching the low setting, maintaining the gas generator speed of the selected engine at the first target speed for a predetermined cool down period, reducing the gas generator speed of the selected engine from the first target speed to a second target speed after expiration of the predetermined cool down period. The method also includes entering the standby mode of operation by the selected engine.

Any single one or any combination of the following features may be used with the examples above. The method may include turning off a heat bleed/generator for the selected engine using the idle cruise regimen controller. The step of reducing to the first target speed further may include reducing a gas generator speed limit to a first level to reduce the gas generator speed to the first target speed using the idle cruise regimen controller. The step of reducing to the second target speed further reducing the gas generator speed limit to a second level to reduce the gas generator speed to the second target speed using the idle cruise regimen controller. The step of decreasing further may include decreasing the torque of the selected engine with reverse engine matching until the torque of the selected engine reaches 0% using the idle cruise regimen controller. The reverse engine matching minimizes NR droop during entry to the standby mode. The step of decreasing further may include maintaining a maximum gas generated speed limit at a level while decreasing a torque of the selected engine using the idle cruise regimen controller.

In another aspect of the present invention, a system for controlling operation of engines of a multi engine aircraft between standby mode and active mode includes a master engine, a slave engine, an idle cruise regimen controller configured to actuate entry of a selected engine into the standby mode of operation in response to receipt of an indication of the selected engine as a standby engine, where the idle cruise regimen controller is further configured to decrease a torque of the selected engine until the torque of the selected engine reaches a low setting, reduce a gas generator speed of the selected engine to a first target speed responsive to the torque of the selected engine reaching the low setting, maintain the gas generator speed of the selected engine at the first target speed for a predetermined cool down period, reduce the gas generator speed of the selected engine from the first target speed to a second target speed after expiration of the predetermined cool down period. A second ICR controller controls the active engine. The system also includes an engine selection controller configured to select the selected engine between the master engine and the slave engine to operate in the standby mode, and a memory configured to store data indicating the selected engine of the master engine and the slave engine.

Any single one or any combination of the following features may be used with the examples above. The system where the idle cruise regimen controller is further configured to turn off a heat bleed/generator for the selected engine. The idle cruise regimen controller is further configured to reduce a gas generator speed limit to a first level to reduce the gas generator speed to the first target speed. The idle cruise regimen controller is further configured to reduce the gas generator speed limit to a second level to reduce the gas generator speed to the second target speed. The idle cruise regimen controller is further configured to decrease the torque of the selected engine with reverse engine matching until the torque of the selected engine reaches 0%. The idle cruise regimen controller is further configured to maintain a maximum gas generated speed limit at a level while decreasing a torque of the selected engine.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates a block diagram of the control system of a multiengine system;
FIGURE 2 illustrates the various factors associated with engine selection between an active engine and a standby engine;
FIGURE 3 illustrates control flow associated with engine selection operating mode between a master engine and a slave engine;
FIGURE 4 illustrates a flow diagram of the process for selecting an engine to operate as a standby engine in ICR mode;
FIGURE 5 illustrates a flow diagram of the process for normal entry of an engine into the standby mode of operation;
FIGURE 6 illustrates a timing diagram of an engine exiting from active mode of operation to standby mode of operation and from standby mode to active mode;
FIGURE 7 illustrates a flow diagram of the manner for determining the exit process to be used from the standby mode;
FIGURE 8 is a flow diagram illustrating the process for a normal exit from the standby mode to the active mode;
FIGURE 9 is a flow diagram illustrating the process for an abnormal exit from the standby mode to the active mode;
FIGURE 10 illustrates a timing diagram of an engine entering the standby mode and exiting the standby mode using either an abnormal fast or slow exit;
FIGURE 11 illustrates an abnormal slow exit from standby mode; and
FIGURE 12 illustrates an abnormal fast exit from standby mode.

### DETAILED DESCRIPTION

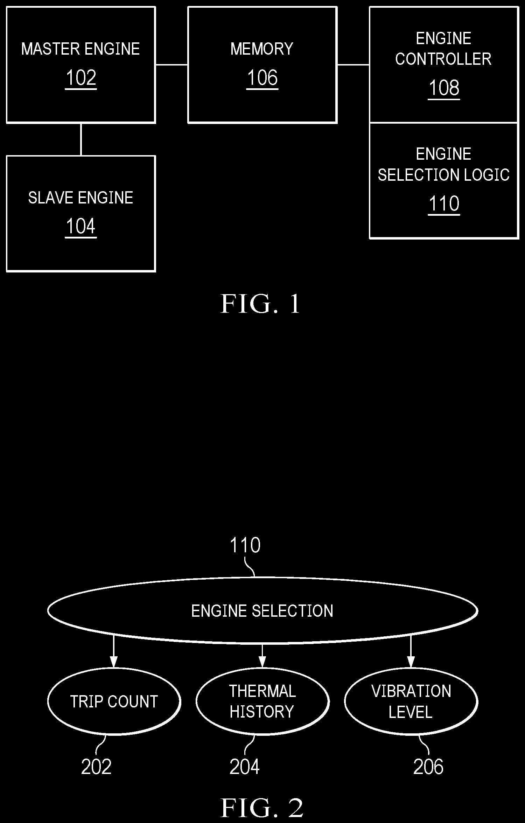

FIGURES 1 through 12, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates a block diagram of the control system of a multiengine system. A master engine 102 and a slave engine 104 provide propulsion to an aircraft. The master engine 102 and slave engine 104 may during certain operating conditions such as cruise alternate between an active mode wherein the active engine is at full or normal power and a standby mode where the standby engine is powered down. The control parameters for the engine in the active mode and the standby mode can be received from two separate locations. During an initial activation of the active and standby modes, the control parameters are stored within a memory 106 that may be accessed by the master engine 102 in order to know whether the master engine will begin in the active mode or the standby mode. When additional changes between modes are made, the control parameters may be provided by the engine controller 108, such as the electronic engine controller (EEC), under the control of engine selection logic 110.

Although FIGURE 1 illustrates one example of a block diagram of the control system of a multiengine system, various changes may be made to FIGURE 1. For example, various components and functions in FIGURE 1 may be combined, further subdivided, replicated, rearranged, or omitted according to particular needs. Also, one or more additional components and functions may be included if needed or desired.

Referring now to FIGURE 2 the engine selection logic 110 may rely upon a number of different factors in order to select whether the master engine 102 or slave engine 104 will be within the active mode or the standby mode. The engine selection logic 110 may select which engine is in the active mode and the standby mode based upon engine selection factors including trip count 202, thermal history 204 and vibration level 206. It will be appreciated that these merely comprise some examples of the various factors upon which engine selection may be based and any number of other factors which may be relevant to preserving engine life and providing improved engine operation may be used for selecting the engines for standby and active modes. The engine selection logic 110 determines the engines to provide the active mode and the standby mode and writes this data into the memory 106 during a most recent mission. At the start of a mission, when the engine powers up, the engine selection logic 110 reads values from the memory 106 to determine which engine was the standby engine during the previous mission. This enables a determination of which engine to select as the standby engine for the current mission. The trip count 202 uses the memory to track the usage based upon the total trip count of both aircraft engines. The engine selection logic 110 chooses the engine having the lower number of total trips as the active engine. For example, if one engine is active for two ICR cycles then for the next two engine cycles the other engine will be active.

Thermal history 204 uses the memory 106 to track usage based upon the total number of operating hours of each engine. The engine selection logic 110 will choose the engine having the lower operating hours as the active engine. The fuel flow usage can be indirectly used to determine which engine should be selected as the active engine. The engine having the greatest fuel flow usage will be the more used engine and the other engine would be selected as the active engine. The engine selection logic 110 may also work with the memory 106 to track the time spent above a predetermined temperature at a predetermined location within the engine. For example, the engine selection logic 110 may track the time spent above a particular temperature when measuring at for example 245 or T6 locations. The engine selection logic will choose the engine having the lower number of hours.

The vibration level 206 uses the engine selection logic 110 in association with the memory 106 to track a time spent above a predetermined vibration level at a predetermined location on an engine. The engine selection logic 110 will track the time spent above a predetermined speed when measured, for example, between the rotor and the low-pressure compressor and choose the engine with the lower number of hours.

Although FIGURE 2 illustrates examples of the various factors associated with engine selection between an active engine and a standby engine, various changes may be made to FIGURE 2. For example, various components and functions in FIGURE 2 may be combined, further subdivided, replicated, rearranged, or omitted according to particular needs. Also, one or more additional components and functions may be included if needed or desired.

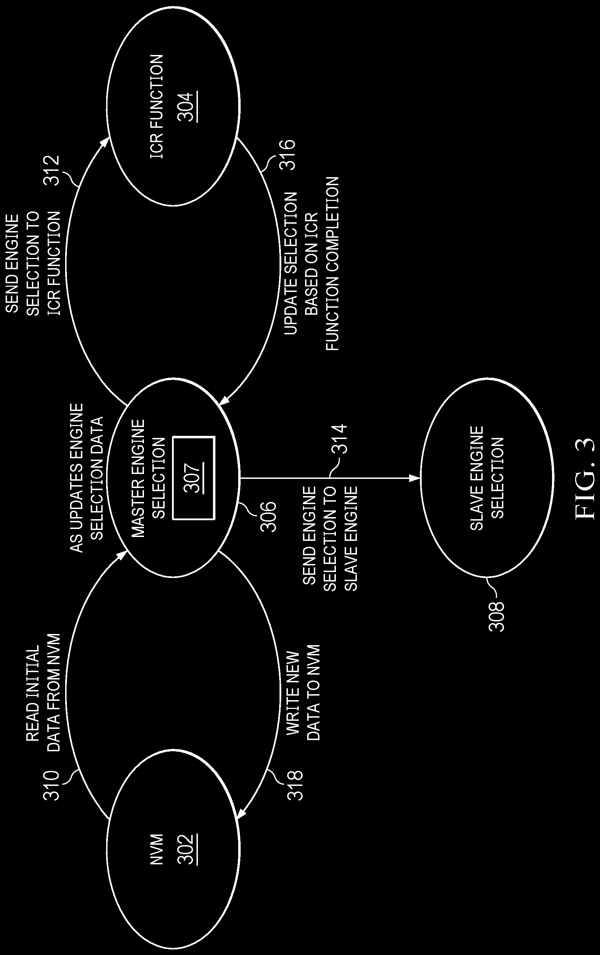

Referring now to FIGURE 3, there is illustrated the logic flow for selection of an engine to operate in either of the active mode or the standby mode. FIGURE 3 illustrates the master engine selection logic 306 decides which engine is in the active mode and which engine is in the selection mode. The selection is provided to the ICR (idle cruise regimen) function 304. The ICR function 304 performs the operation of transitioning an engine into the standby or low-power mode during cruise conditions and later exits the ICR by transitioning the engine back into active or high-power operation. The ICR function 304 performs the operation of transitioning an engine into a standby or low-power mode during cruise conditions also referred to as ICR mode, and later exiting the standby or low-power mode by transitioning the engine back into an active or high-power operation.

Referring now more specifically to FIGURE 3, the master engine selection logic 306 initially reads at 310 data from the nonvolatile memory 302 during flight. The nonvolatile memory 302 will receive the initial data on engine parameters enabling engine selection from sensors located on the engine. There may be various types of sensors on the engine measuring engine parameters for example temperature sensors such as thermocouples, pressure sensors such as strain gauges, etc. The sensor data could include initial aircraft conditions, ambient conditions, sensor measurements, engine data, etc. The data is initialized within the nonvolatile memory 302 of the master engine selection logic 306 in which the alternating engine selection function 307 will update the engine selection data. Responsive to the initial data from the NVM 302, the alternating engine selection function 307 updates the engine selection data at the master engine selection logic 306. The master engine selection logic 306 defines which engine should be the in the active mode and which engine should be in the standby mode and transmits this information to the slave engine selection logic 308 at 314. The master engine selection logic 306 will send the engine selection at 312 to the ICR function 304. The master engine selection logic 306 will send the engine selection to the slave engine selection logic 308 at 314. The ICR function 304 may update the engine selection based upon ICR function 304 completion and transmit the updated selection at 316 back to the master engine selection logic 306. This updated selection is also provided at 314 to the slave engine selection logic 308 and writes the updated selection as new data to the nonvolatile memory 302 at 318.

Although FIGURE 3 illustrates one example of the logic flow for selection of an engine to operate in either of the active mode or the standby mode, various changes may be made to FIGURE 3. For example, various components and functions in FIGURE 3 may be combined, further subdivided, replicated, rearranged, or omitted according to particular needs. Also, one or more additional components and functions may be included if needed or desired.

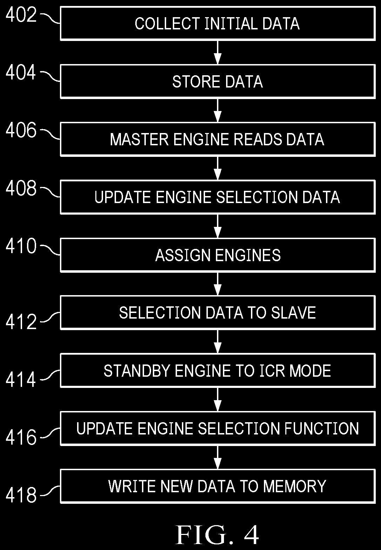

Referring now to FIGURE 4, there is illustrated a flow diagram of the ICR engine selection process 400. Initial data 402 from sensors located on the engine provide the operating parameters necessary to perform engine selection by the master engine selection logic 306. The collected sensor data is stored at step 404 within the nonvolatile memory 302. The master engine selection logic 306 reads the initial data at step 406 from the nonvolatile memory 302. The alternating engine selection function 307 within the master engine selection logic 306 will update the engine selection data at step 408 responsive to the received data from the nonvolatile memory 302. The alternating engine selection function 307 assigns at step 410 the active engine and the standby engine. The master engine selection logic 306 transmits at step 412 data to the slave engine indicating whether it is the active engine or the slave engine.

Responsive to the selection data from the alternating engine selection function 307, the engine designated as the standby engine enters the ICR mode at step 414. The standby engine enters the ICR mode responsive to a command to perform the ICR function received from the alternating engine selection function 307. Responsive to the command, the standby engine is reconfigured and transitions into ICR entry procedures at step 414. During the ICR exit, the standby engine is sent a command to transition into exit procedures from the ICR function 304. Upon completion of the ICR mode and exiting of the ICR mode by the standby engine, the alternating engine selection function 307 is updated on the exit by the ICR function 304. This causes the alternating engine selection function 307 to update the engine selection at 416. This provides information regarding the new standby engine for the next ICR mode. This new data indicating the new ICR mode is written at step 418 to the nonvolatile memory 302 from the master engine selection logic 306.

The active and passive engine mode selections provided by the ICR function 304 can be overridden by the pilot using a momentary switch located within the cockpit. This can be utilized in situations where in the pilot determines that selection of a particular engine as an active engine or a standby engine would create unsafe conditions. The ICR missions provided by the ICR function 304 can be repeated multiple times if necessary to assist in situations such as engine testing.

Although FIGURE 4 illustrates one example of a flow diagram of the ICR engine selection process 400, various changes may be made to FIGURE 4. For example, while shown as a series of steps, various steps in FIGURE 4 could overlap, occur in parallel, occur in a different order, or occur any number of times (including zero times).

Referring now back to FIGURE 3, the master engine selection logic 306 after deciding which engine is in the active mode and which engine is in the standby mode sends the selection to the ICR function 304. The ICR function 304 performs the operation of transitioning the selected standby engine into standby or low-power mode during cruise conditions (also known as ICR) and later exiting ICR by transitioning the engine back into active or high-power operation.

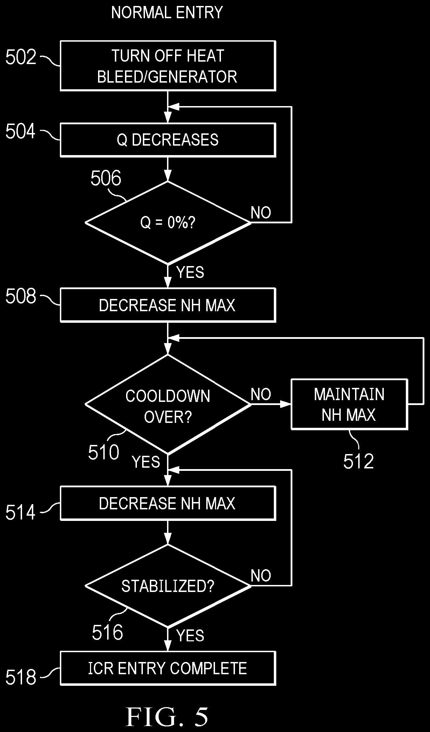

Referring now to FIGURE 5, there is illustrated a flow diagram of the process by which the ICR function 304 transitions an engine selected by the engine selection process of the alternating engine selection function 307 described hereinabove into the standby mode of operation. Initially, the selected standby engine is reconfigured at step 502 by turning off the heat bleed/generator for the standby engine. Responsive to turning off of the heat bleed/generator, the standby engine begins to have its torque decreased with reverse engine matching. This is to minimize the NR drop within the engine. Inquiry step 506 determines if the torque has reached 0% and if not, control passes back to step 504 to continue to allow the torque Q 602 to continue to decrease.

Once inquiry step 506 determines the torque reaches 0%, the NHMAX (maximum gas generator speed) limit is decreased at step 508 to a first level. The NHMAX limit is maintained at the first level for a predetermined cooldown period. Inquiry step 510 determines if the predetermined cooldown period has expired. If the cooldown period has not expired, NHMAX is maintained at the first level at step 512 and the inquiry step 510 continues to monitor for expiration of the cooldown period. Once inquiry step 510 determines the cooldown period expires, the NHMAX limit is further decreased to a second level at step 514. Decreasing of the NHMAX limit causes decreasing of the NH (gas generator speed) level. Inquiry step determines if the NH level has stabilized and if not control passes back to step 514 to further decrease the NHMAX level. When inquiry step 516 determines that the NH level is stabilized the ICR entry process is complete at step 518.

Although FIGURE 5 illustrates one example of a flow diagram of the process by which the ICR function 304 transitions an engine selected by the engine selection process of the alternating engine selection function 307 into the standby mode of operation, various changes may be made to FIGURE 5. For example, while shown as a series of steps, various steps in FIGURE 5 could overlap, occur in parallel, occur in a different order, or occur any number of times (including zero times).

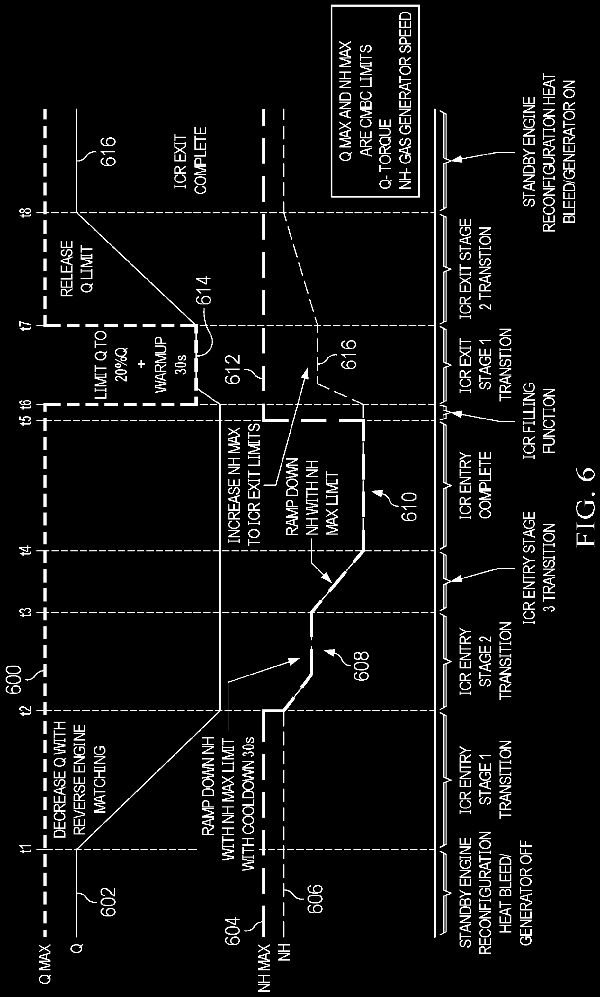

Referring now to FIGURE 6, there is illustrated a timing diagram of the process for entering the ICR mode and exiting the ICR mode for a standby engine. The engine begins entering the standby mode at time t1 and completes the transition to standby mode at time t4. Prior to time t1, the engine is operating in an active mode and the torque (Q) level 602, NHMAX limit 604 and NH level 606 are active mode levels. Responsive to the turning off of the heat bleed/generator for the standby engine that is entering ICR mode, the torque (Q) 602 of the engine entering ICR mode begins to decrease at time t1. Q 602 continues to decrease until time t2. During the transition between time t1 and time t2, the active engine remains at normal operating speed while the torque Q 602 of the standby engine decreases with reverse engine matching until the torque Q reaches 0% decouples. This helps to minimize the NR droop within the standby engine. This first stage of entry into the standby mode of operation will take approximately 10-20 seconds. During this first stage between time t1 and time t2, there is no change of the gas generator speed 606 and NHMAX limit 604.

In the second stage between time t2 and time t3, the NHMAX limit 604 is decreased to a first level indicated generally at 608. This causes a decrease in the NH level 606 down to the newly established NHMAX limit 604 at 608. The NHMAX limit 604 is maintained at the first level 608 for a predetermined cooldown period that expires at time t3. The second stage between time t2 and end time t3 will take approximately 30-60 seconds. The torque Q 602 remains at 0% between time t2 and t3. The cooldown period from the time that NH max is reduced to the first level at 608 and time t3 is approximately 30 seconds.

In a third stage between time t3 and time t4, the NH value 606 is ramped down by decreasing the NHMAX limit 604 to a second level at 610 from time t3 to time t4. The NH value 606 is decreased until it reaches the ICR NH standby target and stabilizes as shown generally at 610. Entry of the engine into the standby mode is complete at time t4 and remains within the standby mode from time t4 to time t5. The third stage transition will take approximately 5-25 seconds. The remainder of the illustration in FIGURE 6 relates to a normal exit from the ICR mode and will be more fully discussed herein below.

Although FIGURE 6 illustrates one example of a timing diagram of the process for entering the ICR mode and exiting the ICR mode for a standby engine, various changes may be made to FIGURE 6. For example, various values, data, components, and functions in FIGURE 6 may be changed, combined, further subdivided, replicated, rearranged, or omitted according to particular needs. Also, one or more additional values, data, components, and functions may be included if needed or desired.

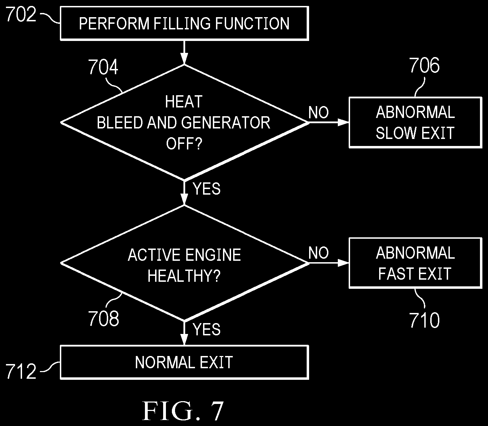

Once an engine has entered the standby mode as described hereinabove with respect to FIGURES 5 and 6, the engine may exit the standby mode in a number of different fashions. These include a normal exit, abnormal slow exit and abnormal fast exit. The process for selecting between the type of exit the standby engine should carry out is more particularly illustrated in FIGURE 7. When it is determined there is a need for an engine to exit the standby mode of operation, the ICR function 304 initially performs at step 702 a filling function which prepares the engine currently in standby mode to exit the standby mode. The filling function involves providing fuel to the standby engine to enable it to begin operating in a higher power mode of operation. Inquiry step 704 determines if the engine currently in standby mode has its heat bleed turned off and if the generator for the engine is turned off. If not, the engine will perform an abnormal slow exit at step 706. The abnormal slow exit is the highest priority exit procedure. If the heat bleed and generator are both determined at inquiry step 704 to be turned off, inquiry step 708 determines if the current active engine (i.e., the other engine that is currently not in standby mode) is healthy. If the active engine is determined to not be healthy, control passes to perform an abnormal fast exit at step 710. The abnormal fast exit is the second priority exit below the abnormal flow exit. If inquiry step 708 determines that the active engine is healthy, a normal exit is performed at step 712. The normal exit comprises the lowest priority exit type. The various procedures for performing the abnormal slow exit, abnormal fast exit and normal exit are described more fully herein below.

In ICR normal mode exit is typically slower with a warm-up period of 0-40 seconds to enable transitioning of the standby engine into an active high power mode. This warm-up period is beneficial as it promotes passenger comfort as well as maximize engine durability. The warmup period helps limit thermal gradients within the engine and increases the lifespan of the engine components susceptible to thermal stress fatigue. An ICR normal exit occurs only when the pilot requests exit from ICR mode at any time of a steady-state cruise segment.

Although FIGURE 7 illustrates one example of a flow diagram of the manner for determining the exit process to be used from the standby mode, various changes may be made to FIGURE 7. For example, while shown as a series of steps, various steps in FIGURE 7 could overlap, occur in parallel, occur in a different order, or occur any number of times (including zero times).

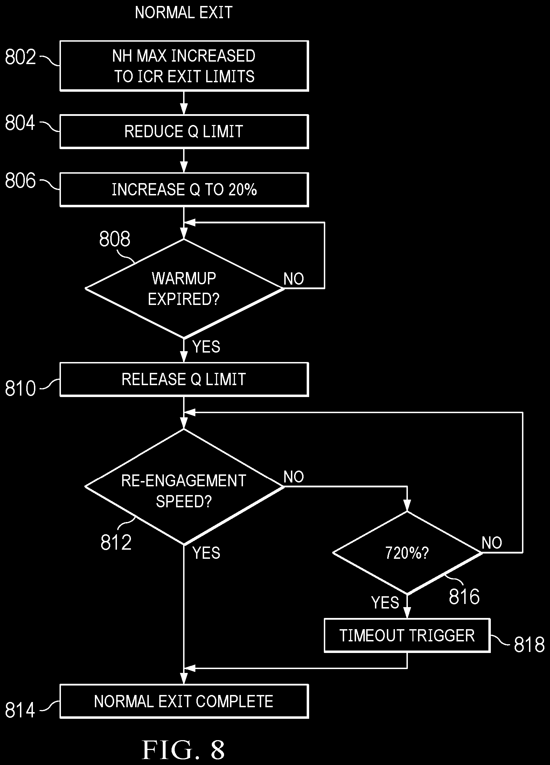

FIGURE 8 illustrates a flow diagram of the process for a normal exit of an engine from standby mode. The process begins by increasing at step 802 the NHMAX limit 604 to the ICR exit limits shown generally at 612. The QMAX limit 600 is reduced to its normal level at step 804 causing the Q 602 and NH level 606 to rapidly increase until the re-engagement speed is reached. The torque limit QMAX 600 is decreased to 20% at step 806 and the torque Q 602 and NH level 606 begin to increase responsive thereto. Inquiry step 808 determines if the warmup period has expired. If not, inquiry step 808 continues to monitor for the end of the warmup period. At the end of the warmup period, the Q limit is released at step 810. Inquiry step 812 determines if the re-engagement speed has been achieved and if not inquiry step 816 determines if the exit time has taken more than 20% of an expected duration. If the expected duration limit has not been exceeded, control passes back to inquiry step 812. If greater than 20% of the expected duration has been exceeded, the ICR exit timeout is triggered at step 818 and forces the ICR exit to be completed at step 814. Once inquiry step 812 determines that the re-engagement speed has been achieved, the normal exit process is indicated as complete at step 814.

Referring now back to FIGURE 6, there is illustrated a timing diagram of the processes for exiting the ICR mode for a standby engine beginning at time t5. At time t5, the ICR function begins performing the filling function for approximately 0-2 seconds to provide fuel to the standby engine and prepare the standby engine for exit procedures. Additionally at time t5, the NHMAX limit 604 is increased to the ICR exit limits as shown generally at 612. This prepares the standby engine for exiting ICR mode in the normal fashion. In a first exit stage transition at t6, the torque limit (QMAX) 600 is decreased to 20% of maximum torque as shown generally at 614. This causes the gas generator speed NH 606 to increase to the level indicated generally at 616. The NH level 606 is maintained at level 616 for a warm-up period of approximately 30 seconds until time t7. The overall transition from time t6 to time t7 takes approximately 30-35 seconds.

In exit stage 2 beginning at time t7, the torque limit QMAX 600 is released and increases to the level indicated generally at 616. Responsive to release of the torque limit QMAX 600, the torque Q 602 and gas generator speed NH 606 rapidly increase from time t7 to time t8 until a re-engagement speed is achieved for the engine exiting standby mode. The time for transition from time t7 to time t8 is approximately 2-20 seconds. If a time to reach re-engagement speed takes more than 20% of the expected duration, the ICR exit timeout is triggered and forces the ICR exit to be completed. At time t8, the ICR normal exit is completed, and the standby engine is reconfigured to turn on the heat bleed/generator. The maximum torque limit QMAX 600 and the maximum gas generator speed NHMAX 604 are based upon the closed-loop controller function limits.

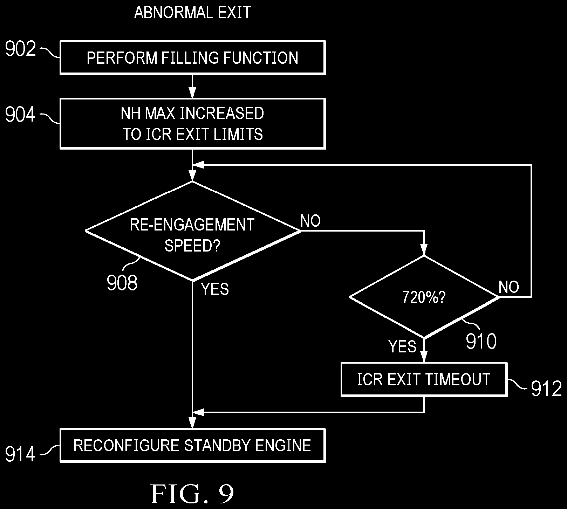

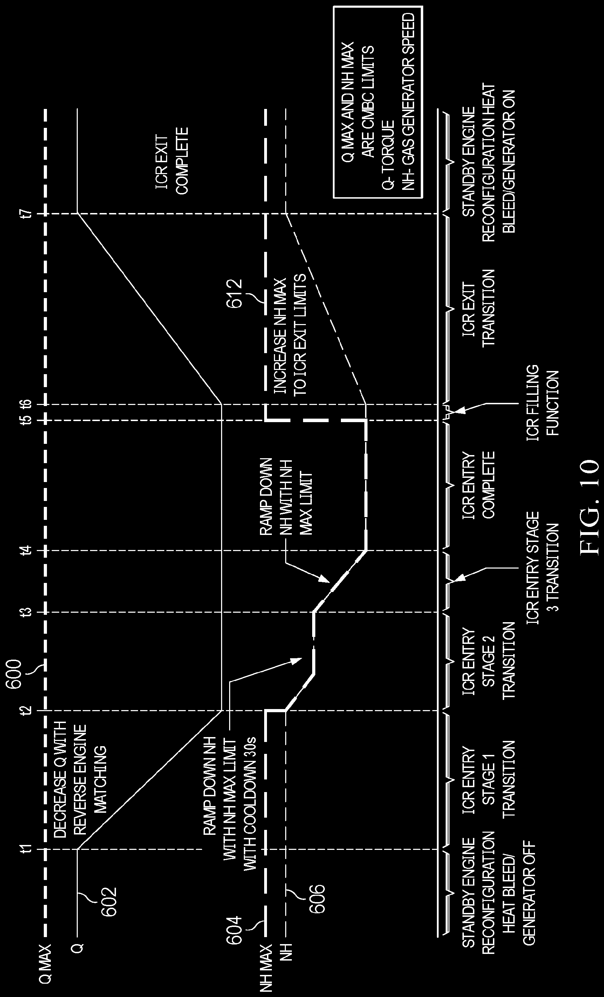

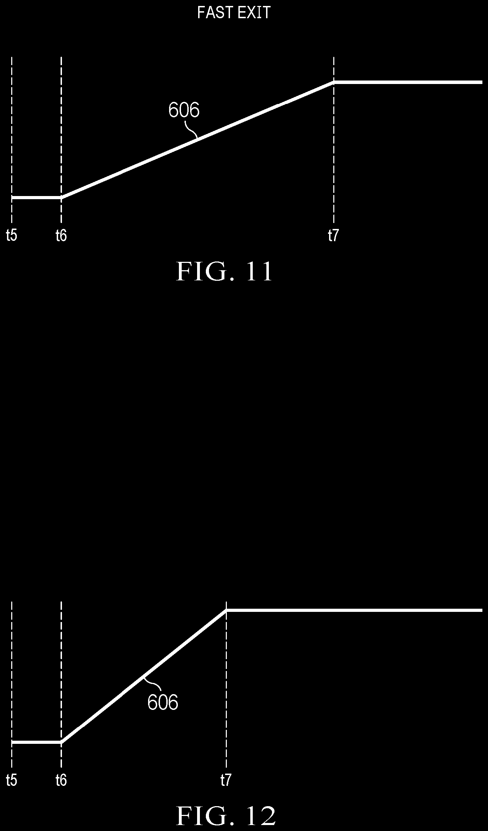

In addition to the normal exit described with respect to FIGURES 8 and 6, the standby engine may exit the standby mode using either an abnormal slow exit or an abnormal fast exit as referenced herein above with respect to FIGURE 7. As can be seen, the flowchart (FIGURE 9) and the timing profile (FIGURE 10) for an abnormal slow exit and an abnormal fast exit are similar with the only difference being the amount of time it takes to transition to re-engagement speed between time t6 and time t7 (FIGUREs 11-12).

An abnormal slow exit has the highest priority in exit types and is typically a quicker procedure as it minimizes the power recovery time in the case of an emergency. During an abnormal slow exit, due to the rapid transition from low power/standby mode to high power mode, the engine undergoes rapid spool speed increases, temperature increases and pressure increases which can cause thermal stresses on the engine. There is only one instance when abnormal slow exit can be performed. This occurs when the heat bleed/generator is on during ICR mode.

The abnormal fast exit has a higher priority than a normal exit but a lower priority than the abnormal slow exit. The abnormal fast exit is typically a quicker procedure that minimizes the power recovery time in the case of an emergency. During the abnormal fast exit, due to the rapid transition from low power/standby mode to high power/active mode, the engine undergoes rapid spool speed increases, temperature increases and pressure increases which can cause thermal stresses on the engine. There are multiple instances when abnormal fast exit can be performed. In a first instance, a pilot can request when multi engine support is required such as when a flight maneuver for object avoidance is required. In the instance when an active engine fails, the standby engine is required to operate in one engine inoperative power rating. An additional situation occurs when the aircraft initial conditions for ICR are not respected, for example, airspeed, altitude, etc. for optimal ICR operation.

Although FIGURE 8 illustrates one example of a flow diagram of the process for a normal exit of an engine from standby mode, various changes may be made to FIGURE 8. For example, while shown as a series of steps, various steps in FIGURE 8 could overlap, occur in parallel, occur in a different order, or occur any number of times (including zero times).

Referring now to FIGURE 9, there is illustrated a flow diagram of the process for a slow exit or fast exit from the ICR mode. The differences in operation associated with the abnormal slow exit or abnormal fast exit processes will be denoted when described. The abnormal exit process is initiated at step 902 where responsive to an indication to exit the ICR mode in either the slow or fast abnormal exit, the ICR filling function is performed at step 902 to provide fuel to the engine that is exiting ICR mode. In the case of a fast abnormal exit more fuel is provided by the ICR filling function than is provided for a slow abnormal exit in order to enable quicker attainment of the re-engagement speed. NHMAX limit 604 is also increased at step 904 to the IRC exit limits. After completion of the filling function, the torque limit QMAX 600 is released causing the torque Q 602 and NH 606 to begin rapidly increasing. Inquiry step 908 determines if the re-engagement speed has been reached responsive to increase of NH 606. If not, control passes to inquiry step 910 to determine if more than 20% of the expected duration for the ICR exit has passed. If not, control passes back to inquiry step 908 to monitor the re-engagement speed. If inquiry step 910 determines that greater than 20% of the expected duration of the exit from ICR mode has passed, the ICR exit timeout is triggered at step 912 to force completion of the ICR exit and the standby engine is reconfigured to active mode at step 914 by turning on the heat bleed/generator. When inquiry step 908 determines that the re-engagement speed has been achieved within less than 20% more than the expected duration, the ICR abnormal exit is completed, and the standby engine is reconfigured by turning on the heat bleed/generator at step 914.

Although FIGURE 9 illustrates one example of a flow diagram of the process for a slow exit or fast exit from the ICR mode, various changes may be made to FIGURE 9. For example, while shown as a series of steps, various steps in FIGURE 9 could overlap, occur in parallel, occur in a different order, or occur any number of times (including zero times).

Referring now to FIGURE 10, there is illustrated a timing diagram of the processes for exiting the ICR mode for a standby engine in the abnormal exit modes. The process illustrated from times t1-t5 is the same as those described previously with respect to FIGURE 6. At time t5, the ICR function 304 performs the filling function for 0-2 seconds. This prepares the standby engine for exit from the standby mode and the max gas generator speed NHMAX 604 is increased to the ICR exit limits as shown generally at 612. The torque limit is released at time T6. At this point, the torque Q 602 and gas generator speed NH 606 rapidly increase from time t6-t7 until the re-engagement speed is reached at time t7. For the abnormal slow exit the time period from t6 to t7 is approximately 5-40 seconds. For the abnormal fast exit the time period from t6 to t7 is approximately 5-30 seconds. In either case, if the standby engine does not reach the re-engagement speed in more than 20% of the expected duration to go from t6 to t7 in either of the abnormal slow exit or abnormal fast exit, the ICR exit timeout is triggered and forces the ICR exit to be completed. At time t7, the ICR exit is completed and the standby engine is reconfigured with the heat bleed/generator being turned on. The max torque QMAX and the max generator speed NHMAX are based on the closed-loop controller function limits. The difference from the normal exit process can be seen in that a warmup period provided in the normal exit is not provided in either of the abnormal slow exit or abnormal fast exit. Additionally, the QMAX limit 600 is not decreased at time T6 to allow for the warmup period.

FIGURES 11 and 12 illustrate the differences between the timing profiles of a slow exit and an abnormal fast exit with respect to the NH speed 606. FIGURE 11 illustrates an abnormal slow exit while FIGURE 12 illustrates an abnormal fast exit. The difference in the timing profiles arises in the time between time t6 and time t7. In the abnormal slow exit, t6 and t7 are further apart in time than they are in the abnormal fast exit. This causes the slope to increase for NH 606 to be much steeper for the abnormal fast exit than for the abnormal slow exit. This is due to the shorter amount of time in which the re-engagement speed is reached.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise", as well as derivatives thereof, mean inclusion without limitation. The term "or" is inclusive, meaning and/or. The phrase "associated with", as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism", "module", "device", "unit", "component", "element", "member", "apparatus", "machine", "system", "processor", or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A system for controlling operation of engines (102, 104) of a multi engine aircraft between standby mode and active mode, comprising:
an idle cruise regimen controller (304) configured to actuate entry of a selected engine (102, 104) into the standby mode of operation in response to receipt of an indication of the selected engine (102, 104) as a standby engine, wherein the idle cruise regimen controller (304) is further configured to:
decrease a torque of the selected engine (102, 104) until the torque of the selected engine (102, 104) reaches a low setting;
reduce a gas generator speed of the selected engine to a first target speed responsive to the torque of the selected engine (102, 104) reaching the low setting;
maintain the gas generator speed of the selected engine (102, 104) at the first target speed for a predetermined cool down period; and
reduce the gas generator speed of the selected engine (102, 104) from the first target speed to a second target speed after expiration of the predetermined cool down period.

2. The system of Claim 1, wherein the idle cruise regimen controller (304) is further configured to turn off a heat bleed/generator for the selected engine (102, 104).

3. The system of Claim 1 or 2, wherein the idle cruise regimen controller (304) is further configured to reduce a gas generator speed limit to a first level (608) to reduce the gas generator speed to the first target speed.

4. The system of Claim 3, wherein the idle cruise regimen controller (304) is further configured to reduce the gas generator speed limit to a second level (610) to reduce the gas generator speed to the second target speed.

5. The system of any preceding claim, wherein the idle cruise regimen controller (304) is further configured to decrease the torque of the selected engine (102, 104) with reverse engine matching until the torque of the selected engine (102, 104) reaches 0%.

6. The system of Claim 5, wherein the reverse engine matching minimizes NR droop during entry to the standby mode.

7. The system of any preceding claim, wherein the idle cruise regimen controller (304) is further configured to maintain a maximum gas generated speed limit at a level while decreasing a torque of the selected engine (102, 104).

8. The system of any preceding claim, further comprising:
a master engine (102);
a slave engine (104);
a second ICR controller (304) for controlling the active engine;
an engine selection controller (110) configured to select the selected engine between the master engine (102) and the slave engine (104) to operate in the standby mode; and
a memory (106; 302) configured to store data indicating the selected engine of the master engine (102) and the slave engine (104).

9. A method for controlling operation of engines (102, 104) of a multi engine aircraft between standby mode and active mode, comprising:
receiving an indication of a selected engine (102, 104) as a standby engine at an idle cruise regimen controller (304);
actuating entry of a selected engine (102, 104) into the standby mode of operation in response to receipt of the indication of the selected engine (102, 104) as the standby engine at the idle cruise regimen controller (304), wherein the step of actuating entry further comprises:
decreasing a torque of the selected engine (102, 104) until the torque of the selected engine (102, 104) reaches a low setting;
reducing a gas generator speed of the selected engine (102, 104) to a first target speed responsive to the torque of the selected engine (102, 104) reaching the low setting:
maintaining the gas generator speed of the selected engine (102, 104) at the first target speed for a predetermined cool down period;
reducing the gas generator speed of the selected engine (102, 104) from the first target speed to a second target speed after expiration of the predetermined cool down period; and
entering the standby mode of operation by the selected engine (102, 104).

10. The method of Claim 9 further comprising turning off a heat bleed/generator for the selected engine (102, 104) using the idle cruise regimen controller (304).

11. The method of Claim 9 or 10, wherein the step of reducing to the first target speed further comprises reducing a gas generator speed limit to a first level (608) to reduce the gas generator speed to the first target speed using the idle cruise regimen controller (304).

12. The method of Claim 11, wherein the step of reducing to the second target speed further reducing the gas generator speed limit to a second level (610) to reduce the gas generator speed to the second target speed using the idle cruise regimen controller (304).

13. The method of any of Claims 9 to 12, wherein the step of decreasing further comprises decreasing the torque of the selected engine (102, 104) with reverse engine matching until the torque of the selected engine (102, 104) reaches 0% using the idle cruise regimen controller (304).

14. The method of Claim 13, wherein the reverse engine matching minimizes NR droop during entry to the standby mode.

15. The method of any of Claims 9 to 13, wherein the step of decreasing further comprises maintaining a maximum gas generated speed limit at a level while decreasing a torque of the selected engine (102, 104) using the idle cruise regimen controller (304).
